# EUROPÄISCHE PATENTSCHRIFT

(11) **EP 3 818 328 B1**
(45) Veröffentlichungstag und Bekanntmachung des Hinweises auf die Patenterteilung: **30.03.2022**
(21) Anmeldenummer: 19762457.0
(22) Anmeldetag: 18.06.2019
(51) Int. Cl.: G01B 3/10

(54) **ROLLMASSBAND MIT AUSFAHRBARER SPANN- UND MESSVORRICHTUNG**
ROLL-UP MEASURING TAPE WITH EXTENSIBLE CLAMPING AND MEASURING DEVICE
RUBAN DE MESURE À ENROULEUR À DISPOSITIF DE TENSION ET DE MESURE TÉLESCOPIQUE

(30) Priorität: 06.07.2018 DE 102018116482
(43) Veröffentlichungstag der Anmeldung: 12.05.2021
(73) Patentinhaber: Hoechstmass Balzer GmbH, 65843 Sulzbach (DE)
(72) Erfinder: NEY, Carsten, 60385 Frankfurt am Main (DE); KREBS, Klaus, 65812 Bad Soden (DE)
(74) Vertreter: Castell, Klaus
(86) Internationale Anmeldenummer: PCT/IB2019/055093
(87) Internationale Veröffentlichungsnummer: WO 2020/008286

(56) Entgegenhaltungen:
- AT-B- 222 494
- CA-A1- 2 305 094
- DE-U1-202005 011 814
- US-A1- 2008 168 674
- US-A1- 2010 275 456

## Beschreibung

Die Erfindung betrifft ein Rollmaßband, aufweisend ein Gehäuse, und ein ausziehbares Maßband, wobei das ausziehbare Maßband aus einem Gehäuseschlitz herausragt.

Zum Messen von Maßen eines industriell hergestellten Produktes, beispielsweise in der Qualitätskontrolle, ist es notwendig, dieses entweder automatisiert oder manuell einzeln zu vermessen. Für die Qualitätskontrolle oder für die Stichprobenkontrolle wird jedes einzelne Produkt einer genauen, zerstörungsfreien Messung unterzogen und aus dem Verhalten des Messwertes über eine große Anzahl von vermessenen Produkten kann ein Rückschluss auf die die Produktion beeinflussende Faktoren gezogen werden. In der Textilindustrie, wo ein großer Anteil an manueller Fertigung herrscht, ist es sehr wichtig, das genaue Maß der hergestellten Textilien zu überprüfen, weil sich durch eine Vielzahl von nicht unbedingt stabilen Fertigungsfaktoren das tatsächliche Maß eines in Serie hergestellten Bekleidungsstücks ändern kann.

In der US-Patentanmeldung US 2008/0168674A1 wird ein Rollmaßband gelehrt, welches eine am vorderen Gehäuseteil ausklappbare Lupe aufweist, die über das ausgefahrene Maßband gelegt werden kann. Die Lupe hilft, mit einer Leselinie an der unteren Seite der Lupe das Maßband abzulesen.

In der österreichischen Patentschrift Nr. 222494 wird ein Rollmaßband als Aufsatz einer Kamera offenbart. Unterhalb des Schlitzes, aus dem das Maßband aus dem Gehäuse ausfährt ist eine ausziehbare Stütze vorhanden, welche das Maßband davon abhält, durch die Schwerkraft abzuknicken und vor die Linse zu fallen.

In der kanadischen Patent CA 2 305 094 wird ein an einem Maßband eines Rollmaßbandes vorhandener Fingerschutz gelehrt, welcher aus dem Rollmaßbandgehäuse ausziehbar ist und mit dem Nullpunkt des Maßband mitlaufen kann, Der Fingerschutz bewahrt den Nutzer gegen Schnittwunden beim intensiven Gebrauch des Rollmaßbandes.

In dem deutsche Gebrauchsmuster DE 20 2005 011 814 U1 wird ein elektronisches Rollmaßband offenbart, welches im Inneren des Gehäuses einen Strichcodeleser aufweist, der zum elektronischen Ablesen einen auf dem Maßband aufgedruckten Strichcode liest.

In der US-Patentanmeldung US 2010/0275456A1 wird ein elektronisches Rollmaßband mit einem Maßband ohne Maßverkörperung offenbart. Das Maßband besteht aus einem sehr dünnen Draht, welches am Ende unterschiedliche Befestigungsköpfe aufweist, dem das Maßband an einem zu vermessenden Objekt befestigt werden kann.

Aufgabe der Erfindung ist es, ein Rollmaßband zum Einsatz in der Qualitätskontrolle und/oder in der Stichprobenkontrolle vorzuschlagen, mit dessen Hilfe eine große Anzahl von Messungen verlässlich und für den Nutzer einfach durchgeführt werden kann.

Die erfindungsgemäße Aufgabe wird gelöst durch ein Rollmaßband mit den Merkmalen nach Anspruch 1. Weitere vorteilhafte Ausgestaltungen sind in den Unteransprüchen zu Anspruch 1 angegeben.

Nach der Erfindung ist also vorgehsehen, dass das Rollmaßband eine Art Spann-und Messvorrichtung in Form eines Hakens aufweist, wobei die Spann-und Messvorrichtung Teil des Rollmaßbandes ist und nicht ein von diesem abtrennbares Zusatzelement ist. Dieser Haken dient einerseits als Hilfselement zum exakten Anlegen des Maßbandes auf das Messobjekt. Andererseits kann der Haken dazu verwendet werden, das zu vermessende textile Bekleidungsstück, wie zum Beispiel einen Hosenbund aber auch jede andere Form von Öffnungen in Kleidungsstücken zu spannen, um so eine gleichmäßige Messbedingung bei der Vermessung einer Vielzahl ähnlicher oder gleicher Kleidungsstücke zu gewährleisten, so dass der Haken dem Nutzer als zusätzlicher Finger zur Verfügung steht.

Nach dem Gedanken der Erfindung ist vorgesehen, dass die Spann- und Messvorrichtung in Form eines Hakens ausgebildet ist und bevorzugt eine gerade Ablesekante aufweist. Durch die gerade Ablesekante wird das rein optische Auslesen des Messwertes durch das menschliche Auge erleichtert.

Für eine industrielle Nutzung in der Qualitätskontrolle und zur Erfassung von möglichst vielen Messwerten in kurzer Zeit ist es vorgesehen, dass im Gehäuse des Rollmaßbandes eine elektronische Ablesevorrichtung zur elektronischen Ablesung der Maßskala vorhanden ist, welche über ein Anforderungssignal in Form eines Knopfdrucks auf einen elektrischen Schalter das Messergebnis über ein Funkprotokoll an einen entfernten Empfänger sendet.

Um die verschiedenen Zustände des Rollmaßbandes zu berücksichtigen, ist vorgesehen, dass ein im Gehäuse vorhandener elektronischer Schalter den ausgefahrenen Zustand der ausfahrbaren Spann- und Messvorrichtung detektiert und an die elektronische Ablesevorrichtung weiterleitet, welche in diesem Zustand von Messergebnis einen vordefinierten Wert abzieht, um die Position der ausfahrbaren Spann- und Messvorrichtung beim Messergebnis zu berücksichtigen, wobei diese Messwertkorrektur wahlweise für Messungen an der Innen- und Außenkante der Spann- und Messvorrichtung durchführbar ist.

Um die Messung, die an einen entfernten Empfänger gesendet wird, zu prüfen, kann ebenso eine elektronische Anzeigevorrichtung in der Oberfläche des Gehäuses vorhanden sein, die das Messergebnis anzeigt.

Für eine ausreichende Stabilität zum industriellen Einsatz sollte die als Haken ausgebildete Spann- und Messvorrichtung so stabil ausgelegt ist, dass diese eine Zugkraft von bis zu 5 kg (ca. 50 N), in besonderer Ausführungsform sogar 10 kg (ca. 100 N) und noch mehr aufnehmen kann. Das hat zur Folge, dass die Spann-und Messvorrichtung nicht abreißt.

Für eine besonders ergonomische Gestaltung des Rollmaßbandes ist vorgesehen, dass ein daumenbetätigbarer Knopf zum Feststellen des Maßbandes in dem Rollmaßband vorhanden ist.

Im Rollmaßband kann das Maßband eine optische Codierung zur elektronischen Auslesung aufweisen, wobei die optische Codierung ein absolutes Maß aufweist, also die Codierung an jeder Stelle des Maßbandes so aufgebaut ist, dass aus dieser an der jeweiligen Stelle das absolute Maß des Maßbandes auslesbar ist, wobei die Codierung beispielsweise ausgesucht sein kann aus der Gruppe bestehend aus: optischer Taktschrift, Maßverkörperung im Noniusverfahren durch zwei mit unterschiedlicher Frequenz nebeneinander angeordneten Maßverkörperungen, Barcode und inkrementeller Code, der durch Mitzählen beim Ausfahren auf das richtige Maß schließen lässt. Es kommen also auch andere, optische maschinenlesbare Codierungen mit einer Absolutmaßcodierung in Frage. So kann die Maßverkörperung auch nicht als Absolutmaß aufgebaut werden. In diesem Fall zählt ein Detektor den Durchgang von optischen Markierungen und zählt den Vorwärts- oder Rückwärtsdurchgang der optischen Markierungen und errechnet somit die aktuelle Maßposition. Durch den absoluten Code ist es für den Anwender leicht möglich das Maßband zu kalibrieren. Hierzu benötigt der Anwender nur eine Art Referenzmeter den er mit dem Maßband abmisst. Zum Eichen durch eine dazu befähigte Amtsperson kann entsprechend vorgegangen werden.

Für einen komplikationslosen Einsatz kann vorgesehen sein, dass das Rollmaßband eine kontaktlose Aufladevorrichtung für die elektronische Ablesevorrichtung in Form einer induktiv gekoppelten Stromübertragung aufweist.

Zur Kontrolle der Durchführung des Messvorgangs ist in weiterer Ausgestaltung der Erfindung vorgesehen, dass das elektronische Rollmaßband eine elektronische Wasserwaage aufweist.

Je nach Einsatzart kann es von Vorteil sein, wenn Spann- und Messvorrichtung dauerhaft im ausgefahrenen Zustand dauerhaft arretierbar ist. In diesem Fall kann die Spann- und Messvorrichtung entweder beim erstmaligen Nutzen herausgezogen werden und danach durch die Arretierung nicht mehr eingefahren werden oder aber bereits in der Fertigung dauerhaft arretiert werden. Diese Festarretierung ist dann sinnvoll, wenn die verschiedenen Maßfunktionen auf eine Maßfunktion reduziert werden soll, um Schulungsarbeiten zum Umgang mit dem elektronischen Maßband zu vereinfachen.

Die Erfindung wird anhand der folgenden Figuren näher erläutert. Es zeigt:
- Fig. 1: zwei benachbarte Ansichten des erfindungsgemäßen Rollmaßbandes, wobei die linke Zeichnung eine ausfahrbare Spann- und Messvorrichtung im eingefahrenen Zustand und die rechte Zeichnung eine ausfahrbare Spann- und Messvorrichtung im ausgefahrenen Zustand zeigt,
- Fig. 2: eine Maßskala und eine optische Codierung auf dem Maßband des Rollmaßbandes aus Fig. 1,
- Fig. 3: eine Ansicht auf das Rollmaßband aus Figur 1 von unten, mit halbseitig geöffnetem Gehäuse,
- Fig. 4: eine Ansicht auf eine Federmechanik zum Ein- und Ausfahren der ausfahrbaren Spann- und Messvorrichtung,
- Fig. 5: eine perspektivische Rückseitenansicht des Rollmaßbandes aus Fig. 1 in einer ersten typischen Anwendungsart,
- Fig. 6: zwei Ansichten auf Details des Inneren des Rollmaßbandes aus Fig. 1,
- Fig. 7: eine Skizze einer zweiten Nutzungsart des Rollmaßbandes aus Fig. 1, der eigentlichen Hauptanwendung).

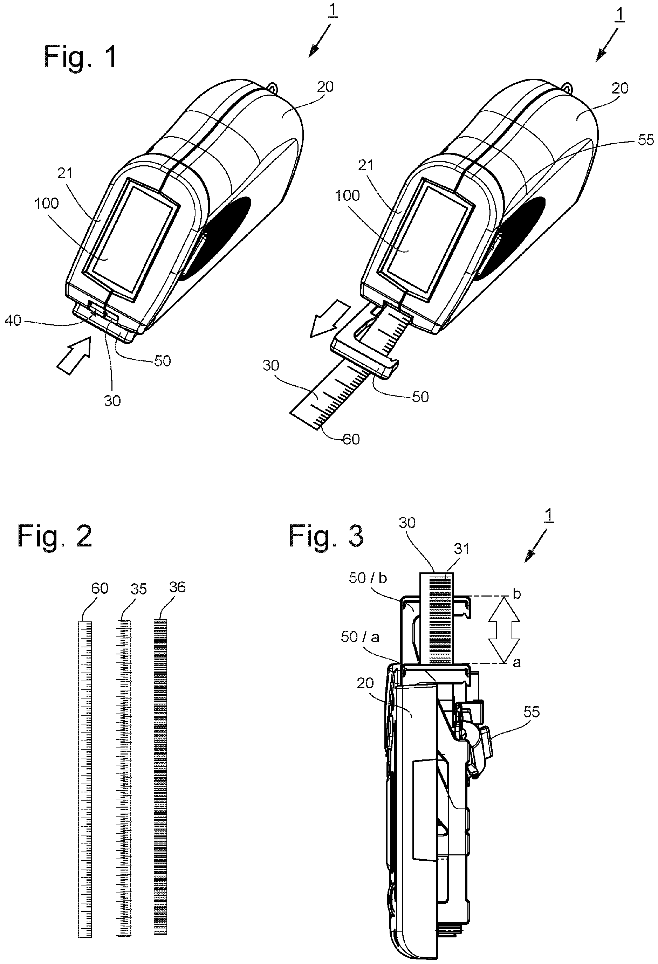

In **Figur 1** ist ein erfindungsgemäßes Rollmaßband 1 in zwei benachbarte Ansichten des dieses Rollmaßbandes 1 dargestellt. Das Rollmaßband 1 weist ein Gehäuse 20 und ein ausfahrbares Maßband 30 auf, wobei das ausfahrbare Maßband 30, aus einem Gehäuseschlitz 40 herausragt. Nach dem Gedanken der Erfindung ist vorgesehen, dass eine aus dem Gehäuse 20 ausfahrbare Spannund Messvorrichtung 50 von einem eingefahrenen Zustand (linke Zeichnung), wie es durch den ersten Pfeil links dargestellt ist, in einen ausgefahrenen Zustand (rechte Zeichnung), wie es durch den rechten Pfeil dargestellt ist, wechseln kann.

Die aus dem Gehäuse 20 ausfahrbare Spann- und Messvorrichtung 50 ist im ausgefahrenen Zustand (rechte Zeichnung) vor dem Gehäuseschlitz 40 angeordnet und dient dabei in einer ersten Nutzungsart als Spann- und Messvorrichtung 50 zum exakten Anlegen an einen Messpunkt an dem zu vermessenden Produkt.

Die aus dem Gehäuse 20 ausfahrbare Spann- und Messvorrichtung 50 hilft durch ihre Form bei einem genauen Anlegen und auch Ablesen des Maßbandes 30.

Um zu vermeiden, dass sich die Spann- und Messvorrichtung 50 bei Nichtgebrauch verfängt, womöglich beim Tragen in der Hosentasche sticht oder bei Einsatz im Textilbereich sogar Schäden an zu verarbeitenden Stoffen durch gezogene Fäden verursacht, ist vorgesehen, dass die aus dem Gehäuse 20 ausfahrbare Spann- und Messvorrichtung 50 ein- und wieder ausfahrbar ist.

In der hier dargestellten Ausführungsform ist das Rollmaßband als elektronisches Rollmaßband ausgeführt. Neben den bereits erwähnten Elementen, weist das elektronische Rollmaßband 1 auch noch eine Anzeigevorrichtung 100 (Display) auf, auf dem der aktuelle Messwert, der durch die aus dem Gehäuse 20 ausfahrbare Spann- und Messvorrichtung 50 auf dem Maßband 30 eingestellt ist, abgelesen werden kann. Zum elektronischen Ablesen ist auf der Rückseite des Maßbandes 30 eine optische Codierung 31 aufgedruckt, die im Inneren des Rollmaßbandes 1 durch einen optischen Sensor 33 abgelesen und an eine elektronische Messeinrichtung 34 weitergeleitet wird. Diese interpretiert die optische Codierung 31, errechnet daraus einen Messwert und leitet diese an die Anzeigevorrichtung 100 zur Anzeige des Messwertes weiter.

Die Maßskala 60 auf der Front des Maßbandes 30 ist auf der linken Seite von Figur 2 abgebildet, wobei es auch möglich ist, dass keine für den Menschen ablesbare Skala erwünscht ist und daher nicht vorhanden ist. Eine auf der Rückseite des Maßbandes 30 vorhandene Maßverkörperung 35 oder ein Barcode 36 sind dazu korrespondierend auf der mittleren und rechten Seite von Figur 2 dargestellt. Eine optische Codierung des Maßbandes 30 kann in Form einer optischen Taktschrift vorhanden sein, als Maßverkörperung 35 im Noniusverfahren mit zwei mit unterschiedlicher Frequenz nebeneinander angeordneten Maßverkörperungen (Figur 2, Mitte) oder als Barcode 36.

(Figur 2, rechts). Schließlich kann eine Codierung auch sequentiell aufgebaut sein, wobei ein Detektor den Durchgang einer Codierung zählt und daraus die Maßposition des Maßbandes 30 rechnerisch ermittelt.

In **Figur 3** ist eine Ansicht auf das Rollmaßband 1 aus Figur 1 von unten und mit halbseitig geöffnetem Gehäuse 20 dargestellt. Durch das halbseitig geöffnete Gehäuse ist sichtbar, wie sich eine aus dem Gehäuse 20 ausfahrbare Spann-und Messvorrichtung 50 von einer ersten Position a in eine zweite Position b bewegt, wobei in dieser Skizze beide Stellungen der aus dem Gehäuse 20 ausfahrbare Spann- und Messvorrichtung 50 dargestellt sind und sich dadurch räumlich überlappen. In dem halbseitige geöffneten Gehäuse 20 kommt eine Daumenwippe 55 zum Vorschein, die Teil einer daumenbetätigbaren Maßbandbremse 53 ist, welche das aus dem Gehäuse 20 ausgezogene Maßband 30 feststellt und gegen die Rückstellkraft einer Wickelfeder zum Einzug des Maßbandes 30 arretiert. Die Daumenwippe 55 kann dabei aber noch andere, kumulative oder alternative Funktionen ausführen, wie zum Beispiel als Bedienungselement für eine elektronische Navigation durch ein grafisches Betriebssystem einer elektronischen Ablesevorrichtung 80 zu dienen.

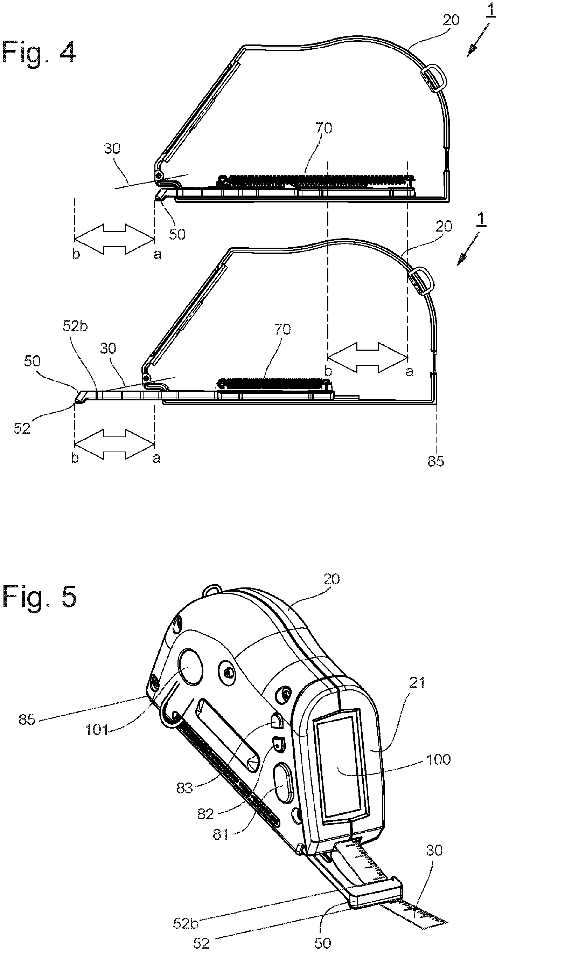

In **Figur 4** ist die Silhouette des Gehäuses 20 des Rollmaßbandes 1 dargestellt, in welche die aus dem Gehäuse 20 ausfahrbare Spann- und Messvorrichtung 50 zusammen mit einer Zugfeder 70 eingeblendet ist. Die aus dem Gehäuse 20 ausfahrbare Spann- und Messvorrichtung 50 ist dabei von einer ersten Position a (eingefahrener Zustand) in eine zweite Position b (ausgefahrener Zustand) bewegbar und in diesen Positionen arretierbar, zumindest aber durch eine Rastvorrichtung fixiert. Im eingefahrenen Zustand (Figur 4 oben) der aus dem Gehäuse 20 ausfahrbare Spann- und Messvorrichtung 50 ist die Zugfeder 70 gelängt und gespannt, und im ausgefahrenen Zustand der aus dem Gehäuse 20 ausfahrbare Spann- und Messvorrichtung 50 ist die Zugfeder 70 geringer gespannt und kurz. Der Weg der aus dem Gehäuse 20 ausfahrbare Spann- und Messvorrichtung 50 ist durch den Doppelpfeilzwischen der ersten Position a und der zweiten Position b in beiden Zeichnungen, Figur 4 oben und Figur 4 unten verdeutlicht, wobei sich die Zugfeder 70 beim Ausfahren der Spann- und Messvorrichtung 50 entspannt. Durch die unterschiedlichen Positionen a und b ergeben sich unterschiedliche Anlagepositionen und Ablesekanten, die je nach Einsatzart von Vorteil sind. Es ist möglich, die Ablesekante 52 an der Vorderkante der Spann- und Messvorrichtung 50 im eingefahrenen Zustand a zu nutzen, wobei ein automatischer Umschalter oder ein manueller Umschalter, wie zum Beispiel die Bedienungstasten 81, 82, und 83, die elektronische Ablesevorrichtung 80 mitsamt der Anzeigevorrichtung 100 so konfiguriert, dass das Maß an dieser Ablesekante 52 im eingefahrenen Zustand a angezeigt wird. Es ist auch möglich, dass die Ablesekante 52 an der Vorderkante der Spann- und Messvorrichtung 50 im ausgefahrenen Zustand b zu nutzen, wobei ein automatischer Umschalter oder ein manueller Umschalter, wie zum Beispiel die Bedienungstasten 81, 82, und 83, die elektronische Ablesevorrichtung 80 mitsamt der Anzeigevorrichtung 100 so konfiguriert, dass das Maß an dieser Ablesekante 52 im ausgefahrenen Zustand b angezeigt wird. Durch einen manuellen Umschalter, wie zum Beispiel die Bedienungstasten 81, 82, und 83, kann auch eingestellt werden, dass das Maß an der Ablesekante 52b an der Rückseitenkante der Spann- und Messvorrichtung 50 im ausgefahrenen Zustand b angezeigt wird. Durch die gleichen die Bedienungstasten 81, 82, und 83 oder durch einen anderen Schalter kann die elektronische Ablesevorrichtung 80 mitsamt der Anzeigevorrichtung 100 auch so konfiguriert werden, dass das Maß an dem Heck 85 des Gehäuses 20 angezeigt wird.

In **Figur 5** ist eine perspektivische Rückseitenansicht des Rollmaßbandes 1 aus Fig. 1 in einer ersten typischen Anwendungsart dargestellt. Die Rückseitenansicht des Rollmaßbandes 1 gibt die Sicht frei auf mit den Fingern der rechten Hand bedienbare Tasten. Allerdings können diese Tasten auch sehr gut mit dem Daumen der linken Hand bedient werden. Diese Bedienungstasten 81, 82, 83 für eine elektronische Ablesevorrichtung 80 im Inneren des Gehäuses sind frei konfigurierbar und jeweils mit 2 Funktionen belegbar. In dieser ersten typischen Anwendungsart wird die aus dem Gehäuse 20 ausfahrbare Spann- und Messvorrichtung 50 dazu verwendet, das ausgerollte Maßband 30 auf die zu vermessende Oberfläche anzulegen (das Band an sich soll nicht mit dem Haken gespannt werden). Das Maß des gespannten Maßbandes 30 kann mit der aus dem Gehäuse 20 ausfahrbare Spann- und Messvorrichtung 50 bequem abgelesen werden. In dieser perspektivischen Ansicht ist auch erkennbar, wie die das Maß an der Ablesekante 52b an der Rückseitenkante der Spann- und Messvorrichtung 50 im ausgefahrenen Zustand b ablesbar ist.

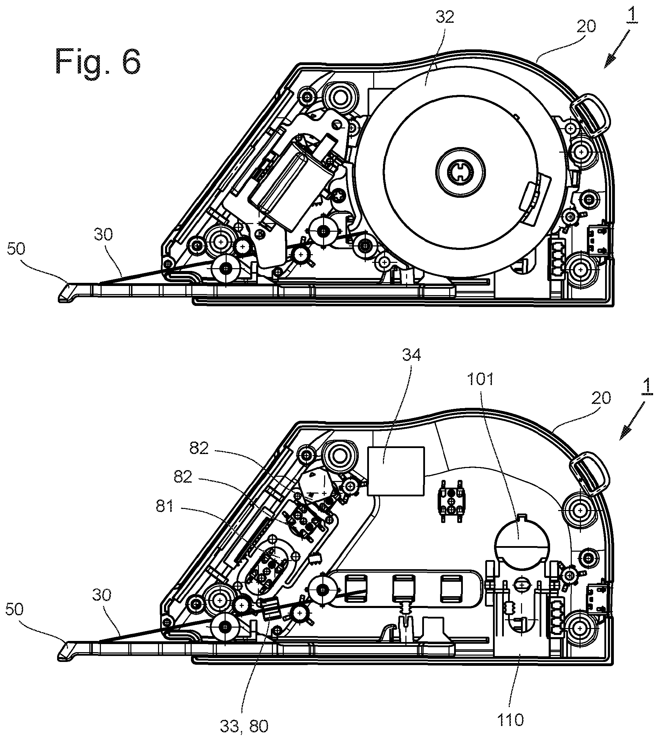

In **Figur 6** ist eine Ansicht auf die inneren Details des erfindungsgemäßen Rollmaßbandes 1 gezeigt, in dem die vordere Gehäusewand des Gehäuses 20 abgenommen ist und die Zugfeder 70 aus der Skizze in Figur 6 entfernt worden ist. Im inneren des Rollmaßbandes 1 befindet sich, wie in der oberen Skizze von Figur 6 dargestellt, eine Wickelspule 32 für das Maßband 30, wobei das Maßband 30 zwischen Wickelspule 32 und dem Gehäuseschlitz 40 durch eine optischen Sensor 33 geführt ist, der eine auf der Rückseite des Maßbandes 30 aufgedruckte, optische Codierung 31 liest und diese an eine elektronische Ablesevorrichtung 80 weiterleitet, welche den detektierten optischen Code interpretiert und daraus einen Messwert errechnet. Die elektronische Ablesevorrichtung 80 leitet den errechneten Messwert als Anzeigewert an eine Anzeigevorrichtung 100 (Display) weiter, wo es vom Anwender abgelesen werden kann. Auf Knopfdruck kann der errechnete Messwert auch über ein Funkprotokoll, wie zum Beispiel über Blue-Tooth^{®}, an einen entfernten Empfänger geleitet werden, wo der ermittelte und übermittelte Messwert in eine Statistik zum Beispiel zur Qualitätskontrolle eingeht. Es ist vorgesehen, dass ein im Gehäuse 20 vorhandener elektronischer Schalter den ausgefahrenen Zustand der ausfahrbaren Spann- und Messvorrichtung 50 detektiert und an die elektronische Ablesevorrichtung 80 weiterleitet, welche in diesem Zustand von Messergebnis einen vordefinierten Wert abzieht, um die Position der ausfahrbaren Spann- und Messvorrichtung 50 beim Messergebnis zu berücksichtigen. Der vordefinierte Wert kann sich je nach Anwendungsfall auf die Innen- oder Außenkante des Hakens beziehen (Innen- und Außenmessungen) Das kann im Menü ausgewählt und eingestellt werden. In der oberen Skizze von Figur 6 ist die Daumenwippe 55 zu erkennen, die einerseits als mechanisches Bedienungselement einer daumenbetätigbaren Maßbandbremse 53 dienen kann, aber auch als Wippe zur Navigation in einem grafischen Betriebssystem, das auf der Anzeigevorrichtung 100 (Display) ausgegeben wird. In der unteren Skizze von Figur 6 ist die Wickelspule 32 und die Daumenwippe 55 entfernt, so dass die innere Rückseitenansicht auf die Bedienungsknöpfe 81, 82, 83 erkennbar ist.

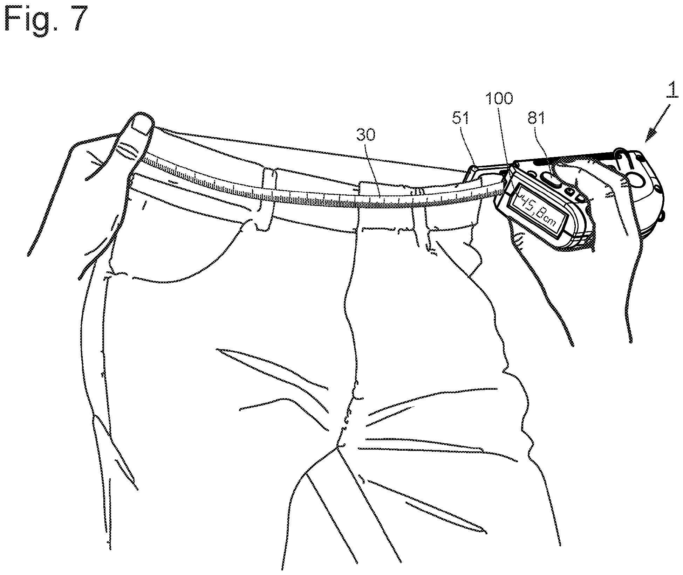

In **Figur 7** ist schließlich eine zweite typische Anwendungsart des Rollmaßbandes 1 gezeigt. Mit der als Haken ausgebildeten, aus dem Gehäuse 20 ausfahrbaren Spann- und Messvorrichtung 50 wird ein Hosenbund gespannt. Zum Messen hält der Nutzer z.B. den linken Teil eines Hosenbundes mit der linken Hand fest und mit der rechten Hand hält der Nutzer das Rollmaßband, um es durch Knopfdrücken zu bedienen. In diesem Fall wird die Messkante 52b als Ablesekante verwendet. Da die rechte Hand nun nicht mehr frei ist, kann der Nutzer mit dem Haken als Ersatz für einen weiteren Finger den rechten Teil des Hosenbundes spannen und so das Maß des Hosenbundes zur Qualitätskontrolle oder zur Stichprobenkontrolle messen. Ein Linkshänder führt die Messung entsprechend anders herum durch. Auf diese Weise ist die Maßabnahme eines Hosenbundes in großer Zahl, wie sie in der Textilproduktion für einen Qualitätskontrolleur üblich ist, bequem durchführbar. Übliche Mengen für einen Qualitätskontrolleuer können zwischen 500 und 2.000 Textilien liegen, die pro Arbeitstag vermessen werden müssen. Für diese Anwendungsart ist vorgesehen, dass die als Haken 51 ausgebildete Spann- und Messvorrichtung 50 so stabil ausgelegt ist, dass diese eine Zugkraft von bis zu 5 kg (ca. 50 N) aufnehmen kann, um beim hektischen Messen unter Zeitdruck mit gegebenenfalls rauer Behandlung nicht zerstört zu werden.

Die dargestellten Ausführungsformen des Rollmaßbandes weisen eine "Händigkeit" auf. Es ist eine Rechtshänder-Ausführung. Das Rollmaßband kann auch spiegelverkehrt als Linkshänder-Ausführung aufgebaut sein. Das bedeutet, das hier gezeigte Rollmaßband ist für die Nutzung der rechten Hand optimiert, wie es in Figur 7 dargestellt ist. Nach einem weiteren Gedanken der Erfindung ist vorgesehen, dass ein daumenbetätigbarer Knopf, Daumenwippe 55, Maßbandbremse 53 und ein weiterer, fingerbetätigbarer Knopf 101 zum Feststellen des Maßbandes und/oder zum Ablesen eines Messwertes durch die elektronische Ablesevorrichtung 80 ergonomisch, also in einer für die rechte oder alternativ für die linke Hand optimierten Anordnung auf der Oberfläche 21 des Gehäuses 20 angeordnet sind. Für einen industriellen Einsatz ist in weiterer Ausführungsform des Rollmaßbandes vorgesehen, dass dieses eine kontaktlose Aufladevorrichtung 110 für die elektronische Ablesevorrichtung 80 in Form einer induktiv gekoppelten Stromübertragung aufweist.

### BEZUGSZEICHENLISTE

- 1: Rollmaßband
- 20: Gehäuse
- 21: Oberfläche
- 30: Maßband
- 31: Optische Codierung
- 32: Wickelspule
- 33: Optischer Sensor
- 34: Elektronische Messeinrichtung
- 35: Maßverkörperung
- 36: Barcode
- 40: Gehäuseschlitz
- 50: Spann- und Messvorrichtung
- 51: Haken
- 52: Ablesekante
- 52b: Ablesekante
- 53: Maßbandbremse
- 55: Daumenwippe
- 60: Maßskala
- 70: Zugfeder
- 80: Elektronische Ablesevorrich-tung
- 81: Bedienungstaste
- 82: Bedienungstaste
- 83: Bedienungstaste
- 85: Heck

- 100: Anzeigevorrichtung (Display)
- 101: Fingerbetätigbarer Knopf
- 110: Kontaktlose Aufladevorrich-tung

- a: Erste Position
- b: Zweite Position

## Patentansprüche

1. Rollmaßband (1), aufweisend
- ein Gehäuse (20), und
- ein ausziehbares Maßband (30),
wobei das ausziehbare Maßband (30) dazu ausgebildet ist aus einem Gehäuseschlitz (40) herauszuragen,
wobei eine aus dem Gehäuse (20) ausfahrbare Spann- und Messvorrichtung (50) vorhanden ist,
welche im ausgefahrenen Zustand vor dem Gehäuseschlitz (40) angeordnet ist und als Spann- und Messvorrichtung zum exakten Ablesen einer Maßskala (60) auf dem Maßband (30) und/oder zum Spannen eines Messprüflings dient, wobei
die Spann- und Messvorrichtung (50) in Form eines Hakens (51) ausgebildet ist und bevorzugt eine gerade Ablesekante (52) aufweist, und wobei im Gehäuse (20) eine elektronische Ablesevorrichtung (80) zur elektronischen Ablesung der Maßskala (60) vorhanden ist, welche dazu ausgebildet ist über ein Anforderungssignal in Form eines Knopfdrucks auf einen elektrischen Schalter (81, 82, 83) das Messergebnis über ein Funkprotokoll an einen entfernten Empfänger zu senden,
wobei die elektronische Ablesevorrichtung (80) kalibrierbar und/oder eichfähig ist, und wobei
ein im Gehäuse (20) vorhandener elektronischer Schalter dazu ausgebildet ist den ausgefahrenen Zustand der ausfahrbaren Spann- und Messvorrichtung (50) zu detektieren
und an die elektronische Ablesevorrichtung (80) weiterzuleiten, welche dazu ausgebildet ist in diesem Zustand vom Messergebnis einen vordefinierten Wert abzuziehen, um die Position der ausfahrbaren Spann- und Messvorrichtung (50) beim Messergebnis zu berücksichtigen, wobei diese Messwertkorrektur wahlweise für Messungen an der Innen- und Außenkante der Spann- und Messvorrichtung (50) durchführbar ist.

2. Rollmaßband nach Anspruch 1,
**dadurch gekennzeichnet, dass**
eine elektronische Anzeigevorrichtung (100) in der Oberfläche (21) des Gehäuses (20) dazu ausgebildet ist das Messergebnis anzuzeigen.

3. Rollmaßband nach Anspruch 1 oder 2 ,
**dadurch gekennzeichnet, dass**
die als Haken (51) ausgebildete Spann- und Messvorrichtung (50) so stabil ausgelegt ist, dass diese eine Zugkraft von bis zu 5 kg (ca. 50 N) aufnehmen kann.

4. Rollmaßband nach einem der Ansprüche 1 bis 3,
**dadurch gekennzeichnet, dass**
das Maßband (30) eine optische Codierung (31) zur elektronischen Auslesung aufweist, wobei die optische Codierung (31) ein absolutes Maß aufweist, also die Codierung (31) an jeder Stelle des Maßbandes (30) so aufgebaut ist, dass aus dieser an der jeweiligen Stelle das absolute Maß des Maßbandes (30) auslesbar ist, wobei die Codierung (31) ausgesucht ist aus der Gruppe bestehend aus: optischer Taktschrift, Maßverkörperung im Noniusverfahren durch zwei mit unterschiedlicher Frequenz nebeneinander angeordneten Maßverkörperungen, Barcode, inkrementeller Code, der durch Mitzählen beim Ausfahren auf das richtige Maß schließen lässt.

5. Rollmaßband nach einem der Ansprüche 1 bis 4,
**dadurch gekennzeichnet, dass**
dieses eine kontaktlose Aufladevorrichtung (110) für die elektronische Ablesevorrichtung (80) in Form einer induktiv gekoppelten Stromübertragung aufweist.

6. Rollmaßband nach einem der Ansprüche 1 bis 5,
**dadurch gekennzeichnet, dass**
dieses eine elektronische Wasserwaage aufweist.

7. Rollmaßband nach einem der Ansprüche 1 bis 6,
**dadurch gekennzeichnet, dass**
über mindestens einen elektronischen Schalter (81, 82, 83) eine Aufnahme des Maßes von bis zu vier unterschiedlichen Anlagepositionen einstellbar ist, wobei diese Anlagepositionen an folgenden Positionen vorhanden sind:
- Ablesekante (52) an der Vorderkante der Spann- und Messvorrichtung (50) im eingefahrenen Zustand (a),
- Ablesekante (52) an der Vorderkante der Spann- und Messvorrichtung (50) im ausgefahrenen Zustand (b),
- Ablesekante (52b) an der Rückseitenkante der Spann- und Messvorrichtung (50) im ausgefahrenen Zustand (b),
- Anlageposition am Heck (85) des Gehäuses (20).

8. Rollmaßband nach einem der Ansprüche 1 bis 7,
**dadurch gekennzeichnet, dass** die Spann- und Messvorrichtung (50) dauerhaft im ausgefahrenen Zustand arretierbar ist.

## Claims

1. Roll-up measuring tape (1) having
- a housing (20), and
- an extensible measuring tape (30),
wherein the extensible measuring tape (30) is designed to protrude out of a housing slot (40),
wherein a clamping and measuring device (50) is provided which is extendable out of the housing (20), and which is arranged in front of the housing slot (40) in the extended state, and which functions as a clamping and measuring device for exact reading of a measurement scale (60) on the measuring tape (30) and/or for the clamping of a measuring test specimen, wherein
the clamping and measuring device (50) is designed in the shape of a hook (51) and preferably has a straight reading edge (52), and wherein
an electronic reading device (80) is present in the housing (20) for electronic reading of the measurement scale (60) and is designed to send the measuring result via a wireless protocol to a remote receiver via a request signal that takes the form of a push of a button on an electric switch (81, 82, 83),
wherein the electronic reading device (80) can be calibrated and/or is approvable, and wherein
an electronic switch, present in the housing (20), is designed to detect the extended state of the extendable clamping and measuring device (50) and to forward this to the electronic reading device (80), which is designed to subtract a predefined value from the measuring result in this state in order to take into account the position of the extendable clamping and measuring device (50) during the measuring result, wherein this measured value correction can be carried out selectively for measurements on the inner and outer edges of the clamping and measurement device (50).

2. Roll-up measuring tape according to claim 1,
***characterized in that***
an electronic display device (100) in the surface (21) of the housing (20) is designed to display the measuring result.

3. Roll-up measuring tape according to claim 1 or 2,
***characterized in that***
the clamping and measuring device (50) designed as a hook (51) is configured to be so stable that it can withstand a tensile force of up to 5 kg (ca. 50 N).

4. Roll-up measuring tape according to one of claims 1 to 3,
***characterized in that***
the measuring tape (30) has an optical coding (31) for electronic reading, wherein the optical coding (31) has an absolute measurement, thus the coding (31) is incorporated at each point of the measuring tape (30) such that the absolute measurement of the measuring tape (30) can be read therefrom at the respective point, wherein the coding (31) is selected from the group consisting of: optical clocking script, measurement standard in the nonius method using two measuring standards with different frequencies arranged next to one another, barcode, incremental code, which includes counting to the correct measurement during extension.

5. Roll-up measuring tape according to one of claims 1 to 4,
***characterized in that***
this has a contactless charging device (110) for the electronic reading device (80) in the form of an inductively coupled current transfer.

6. Roll-up measuring tape according to one of claims 1 to 5,
***characterized in that***
this is an electronic spirit level.

7. Roll-up measuring tape according to one of claims 1 to 6,
***characterized in that***
a recording of the measurement of up to four different contact positions can be set via at least one electronic switch (81, 82, 83), wherein these contact positions are available at the following positions:
- reading edge (52) on the front edge of the clamping and measuring device (50) in the retracted state (a),
- reading edge (52) on the front edge of the clamping and measuring device (50) in the extended state (b),
- reading edge (52b) on the rear edge of the clamping and measuring device (50) in the extended state (b),
- contact position at the back (85) of the housing (20).

8. Roll-up measuring tape according to one of claims 1 to 7,
***characterized in that***
the clamping and measuring device (50) can be locked in the extended state for the long term.

## Revendications

1. Mètre-ruban (1), comportant
- un boîtier (20), et
- un ruban de mesure extensible (30),
sachant que le ruban de mesure extensible (30) est constitué pour dépasser d'une fente de boîtier (40),
sachant qu'un dispositif de serrage et de mesure (50) pouvant sortir du boîtier (20) est présent, lequel est disposé à l'état sorti devant la fente de boîtier (40) et sert en tant que dispositif de serrage et de mesure pour la lecture exacte d'une échelle de mesures (60) sur le ruban de mesure (30) et/ou pour serrer un échantillon de mesure,
sachant que le dispositif de serrage et de mesure (50) est constitué sous la forme d'un crochet (51) et comporte de préférence un bord de lecture droit (52) et sachant qu'un dispositif de lecture électronique (80) pour la lecture électronique de l'échelle de mesures (60) est présent dans le boîtier (20), lequel est constitué pour envoyer par le biais d'un signal de demande sur la forme d'un appui sur un bouton sur un interrupteur électrique (81, 82, 83), le résultat de mesure par un protocole radio à un récepteur éloigné,
sachant que le dispositif de lecture électronique (80) peut être calibré et/ou étalonné et
sachant qu'un interrupteur électronique présent dans le boîtier (20) est constitué pour détecter l'état sorti du dispositif de serrage et de mesure (50) pouvant sortir et le transmettre au dispositif de lecture électronique (80), lequel est constitué pour déduire dans cet état du résultat de mesure une valeur prédéfinie pour prendre en compte la position du dispositif de serrage et de mesure (50) pouvant sortir lors du résultat de mesure, sachant que cette correction de valeur de mesure peut être exécutée sélectivement pour des mesures sur le bord intérieur et extérieur du dispositif de serrage et de mesure (50).

2. Mètre-ruban selon la revendication 1,
***caractérisé en ce qu*** '
un dispositif d'affichage électronique (100) est constitué dans la surface (21) du boîtier (20) pour afficher le résultat de mesure.

3. Mètre-ruban selon la revendication 1 ou 2,
***caractérisé en ce que***
le dispositif de serrage et de mesure (50) constitué sous la forme de crochet (51) est conçu de façon si stable que celui-ci peut absorber une force de traction allant jusqu'à 5 kg (env. 50 N).

4. Mètre-ruban selon l'une quelconque des revendications 1 à 3,
***caractérisé en ce que***
le ruban de mesure (30) comporte une codification optique (31) pour la lecture électronique, sachant que la codification optique (31) comporte une mesure absolue, ainsi la codification (31) est conçue à chaque point du ruban de mesure (30) de telle manière qu'il est possible de lire à partir de celle-ci à chaque point respectif, la mesure absolue du ruban de mesure (30), sachant que la codification (31) est choisie à partir du groupe composé de : écriture rythmique optique, mesure matérialisée dans un procédé à vernier par deux mesures matérialisées disposées l'une à côté de l'autre à une fréquence différente, code à barres, code à progressions, qui permet de révéler la mesure exacte par comptabilisation lors de la sortie.

5. Mètre-ruban selon l'une quelconque des revendications 1 à 4,
***caractérisé en ce que***
celui-ci comporte un dispositif de charge sans contact (110) pour le dispositif de lecture électronique (80) sous la forme d'une transmission de courant couplée de façon inductive.

6. Mètre-ruban selon l'une quelconque des revendications 1 à 5,
***caractérisé en ce qu*** '
celui-ci comporte un niveau à bulle électronique.

7. Mètre-ruban selon l'une quelconque des revendications 1 à 6,
***caractérisé en ce qu*** '
un enregistrement de la mesure peut être réglé jusqu'à quatre positions d'installation différentes par le biais d'au moins un interrupteur électronique (81, 82, 83), sachant que ces positions d'installation sont présentes aux positions suivantes :
- bord de lecture (52) sur le bord avant du dispositif de serrage et de mesure (50) à l'état rentré (a),
- bord de lecture (52) sur le bord avant du dispositif de serrage et de mesure (50) à l'état sorti (b),
- bord de lecture (52b) sur le bord arrière du dispositif de serrage et de mesure (50) à l'état sorti (b),
- position d'installation à l'arrière (85) du boîtier (20).

8. Mètre-ruban selon l'une quelconque des revendications 1 à 7,
***caractérisé en ce que***
le dispositif de serrage et de mesure (50) peut être bloqué en permanence à l'état sorti.
